(19) Europäisches Patentamt
European Patent Office
Office européen des brevets

(11) **EP 3 603 911 B1**

(12) **EUROPEAN PATENT SPECIFICATION**

(45) Date of publication and mention
of the grant of the patent:
**12.07.2023 Bulletin 2023/28**

(21) Application number: **18777613.3**

(22) Date of filing: **29.03.2018**

(51) International Patent Classification (IPC):
**B28B 3/02** *(2006.01)*     **B28B 11/24** *(2006.01)*
**C04B 28/12** *(2006.01)*     **C04B 40/02** *(2006.01)*
**C04B 28/10** *(2006.01)*

(52) Cooperative Patent Classification (CPC):
(C-Sets available)
**B28B 3/00; B28B 11/24; C04B 28/10; C04B 28/12;**
Y02P 40/18                                         (Cont.)

(86) International application number:
**PCT/JP2018/013373**

(87) International publication number:
**WO 2018/181779 (04.10.2018 Gazette 2018/40)**

(54) **MOLDED BODY USING HYDRAULIC LIME AND METHOD FOR PRODUCING SAME**

FORMKÖRPER UNTER VERWENDUNG VON HYDRAULISCHEM KALK UND VERFAHREN ZU
SEINER HERSTELLUNG

CORPS MOULÉ UTILISANT DE LA CHAUX HYDRAULIQUE ET PROCÉDÉ POUR SA FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2017 JP 2017065446**

(43) Date of publication of application:
**05.02.2020 Bulletin 2020/06**

(73) Proprietor: **Kusunoki Sekkai Co. Ltd.
Tokyo 135-0064 (JP)**

(72) Inventor: **IKEDA, Katsutoshi
Tokyo 135-0064 (JP)**

(74) Representative: **Beckmann, Claus
Kraus & Weisert
Patentanwälte PartGmbB
Thomas-Wimmer-Ring 15
80539 München (DE)**

(56) References cited:
**WO-A1-2012/172886     WO-A1-2013/079732
JP-A- H05 170 497       JP-A- H07 267 713
JP-A- 2002 011 366      JP-A- 2010 064 902
JP-A- 2010 126 420**

(52) Cooperative Patent Classification (CPC): (Cont.)

C-Sets
**C04B 28/10, C04B 14/06, C04B 14/28,
C04B 40/0071, C04B 40/0231;
C04B 28/12, C04B 14/06, C04B 14/28,
C04B 40/0071, C04B 40/0231**

**Description**

**TECHNICAL FIELD**

The present invention pertains to a molded body in which hydraulic lime is used and a method for producing the same.

BACKGROUND ART

That there is a building material known as hydraulic lime and that it solidifies after being dissolved in water, let stand, and dried has been known since the era of ancient Rome (the 2nd century BCE). Within hydraulic lime, there is natural hydraulic lime obtained by firing silicic natural limestone and slaking by adding water and artificial hydraulic lime in which a pozzolan substance or a material that expresses hydraulicity is mixed with slaked lime. Hydraulic lime does not dissolve in water after hardening and thus, when used in a composite material including rebar, has the excellent characteristic of the rebar not readily rusting, but is not presently used as building structural members because its compressive strength is extremely poor in comparison with, for example, concrete.

Meanwhile, it has been revealed that if a mold is filled with a mixture of hydraulic lime with water and the mixture restrained thereby, and submitted to a carbon dioxide gas cure, when calcium hydroxide crystals and $2CaO \cdot SiO_2$ hydrate in the hydraulic lime bind to carbon dioxide and change into calcium carbonate crystals, the bonds between the crystals become firm due to volume expansion being restrained by the mold and excellent strength is exhibited (Patent Document 1).

Patent Document 2 discloses a molded body and a method for producing a molded body starting from a mixture of hydraulic lime and water.

[Patent Document 1] JP 5175165 B
[Patent Document 2] WO 2013/079732

SUMMARY OF INVENTION

TECHNICAL PROBLEM

The objective of the present invention is to provide a method for producing a molded body comprising hydraulic lime, a molded body, and a member.

SOLUTION TO PROBLEM

With conventional techniques, there are problems such as requiring a troublesome step of restraining in a mold or greater strength being required as a building structural member or construction material. As a result of investigating various production methods, the present inventors found that a molded body with improved strength can be produced without requiring a step for restraining to a mold by press molding a mixture of hydraulic lime and water at a pressure of 5 N/mm$^2$ or greater and submitting the obtained press-molded body to a carbon dioxide gas cure and achieved the present invention.

The present invention, which solves the abovementioned problems, is described in the appended claims.

ADVANTAGEOUS EFFECTS OF INVENTION

According to the present invention, a method for producing a molded body from a mixture comprising hydraulic lime, a molded body, and a member can be provided.

BRIEF DESCRIPTION OF DRAWINGS

[Figure 1] A drawing showing an outline of the hardening mechanism of hydraulic lime.

[Figure 2] A drawing showing the relationship between the molding pressure and the flexural strength.

[Figure 3] A drawing showing the relationship between the carbon dioxide gas curing period and the flexural strength when the aggregate is silica sand No. 8.

[Figure 4] A drawing showing the relationship between the carbon dioxide gas curing period and the flexural strength when the aggregate is calcium carbonate.

[Figure 5] A drawing showing the effects of the particle size and type of the aggregate on the relationship between the carbon dioxide gas curing period and the flexural strength.

[Figure 6] A drawing showing the particle size of the aggregate by means of the relationship between the particle diameter and the permeability.

[Figure 7] A drawing showing the effects of the curing period on the relationship between the molding pressure and the flexural strength.

[Figure 8] A drawing showing the effects of the curing carbon dioxide concentration on the relationship between the molding pressure and the flexural strength.

[Figure 9] A drawing showing the relationship between the molding pressure and the flexural strength for a test piece of hydraulic lime alone.

[Figure 10] A drawing showing the relationship between the molding pressure and the density of the molded body.

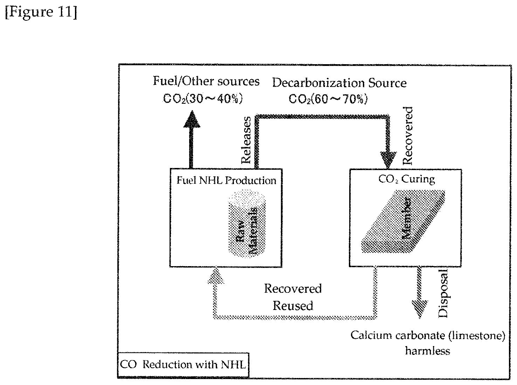

[Figure 11] A drawing showing the production process for a natural hydraulic lime member in which carbon dioxide gas is circulated.

DESCRIPTION OF EMBODIMENTS

Below, the present invention shall be explained in detail.

The method for producing a molded body of one embodiment according to the present invention comprises (a) a step for press molding a mixture comprising hydraulic lime and water at a pressure of 5 $N/mm^2$ or greater and (b) a step for submitting the press-molded body obtained in (a) to a carbon dioxide gas cure.

[Molding Process]

The production method in the present embodiment comprises a step for press molding a mixture comprising hydraulic lime and water at a pressure of 5 $N/mm^2$ or greater.

(Mixture)

The mixture of the present embodiment comprises hydraulic lime and water.

(Hydraulic Lime)

The hydraulic line in the present embodiment includes natural hydraulic lime (NHL) and artificial hydraulic lime (HL) in which a pozzolan substance or a material that expresses hydraulicity is mixed with slaked lime.

Natural Hydraulic Lime

Natural hydraulic lime in the present embodiment means lime obtained by firing argillaceous or silicic limestone (also called marl) and is defined by European standard as "limes produced by burning of more or less argillaceous or siliceous limestones with reduction to powder by slaking with or without grinding. All NHL have the property of setting a hardening under woter. Atmospheric carbon dioxide contributes to the hardening processs."

The main components of natural hydraulic lime are calcium hydroxide ($Ca(OH)_2$), calcium carbonate ($CaCO_3$), dicalcium silicate ($2CaO \cdot SiO_2$, belite, hereafter $C_2S$), and silicon dioxide ($SiO_2$).

As shown in Table 1, the chemical analysis results are that NHL contains roughly 60% CaO and 10-20% $SiO_2$, which cause hydraulicity. The cementation index C.I. in Table 1 is one parameter showing the degree of hydraulicity and is calculated with the following formula.

$$C.I. = \frac{2.8 \times SiO_2 + 1.1 \times Al_2O_3 + 0.7 \times Fe_2O_3}{CaO + 1.4 \times MgO} \qquad (1)$$

[Table 1] Natural Hydraulic Lime Chemical Analysis Results

| Standard | Color | Area of Production | CaO | $SiO_2$ | $Al_2O_3$ | $Fe_2O_3$ | MgO | $HCl\text{-}CO_2$ | C.I. |
|---|---|---|---|---|---|---|---|---|---|
| NHL2 | Brown | A | 60.14 | 11.46 | 2.83 | 0.90 | 1.73 | - | 0.57 |
| NHL2 | White | B | 63.06 | 10.86 | 1.45 | 0.54 | 0.82 | 4.86 | 0.50 |
| NHL3.5 | White | B | 60.17 | 16.33 | 1.57 | 0.53 | 0.53 | 4.60 | 0.74 |
| NHL3.5 | Grey | B | 60.17 | 18.73 | 2.18 | 0.74 | 1.83 | 5.77 | 0.88 |
| NHL5 | Grey | B | 56.64 | 19.26 | 2.71 | 0.82 | 2.54 | 7.75 | 0.95 |

It is understood that the higher the cementation index C.I. in natural hydraulic lime, the higher the defined strength and the higher the proportion of $SiO_2$. Natural hydraulic lime is the lime that is historically the basis for the invention of cement and is a material with increased hydrate components. The chemical components of cement are roughly equivalent to those of natural lime, but in addition to $C_2S$, clinker such as tricalcium silicate ($3CaO \cdot SiO_2$ or alite, hereafter $C_3S$), calcium aluminate ($3CaO \cdot Al_2O_3$ or aluminate, hereafter $C_3A$), calcium aluminoferrite ($4CaO \cdot Al_2O_3 \cdot Fe_2O_3$ or ferrite, hereafter $C_4AF$) and calcium sulfate ($CaSO_4 \cdot 2H_2O$ or gypsum) are included.

Both $C_3S$ and $C_2S$ are silicate salts and are collectively called the "silicate phase". Further, $C_3A$ and $C_4A$ are present in interstices of the silicate phase in the clinker and are therefore collectively called the "interstitial phase". Properties such as hydration reaction speed, strength expression, and heat of hydration differ in each clinker mineral. By changing the composition of such clinker minerals with different properties and further, changing the amount of gypsum added, the degree of fineness of the cement (specific surface area value), etc., various cements with different physical properties can be produced.

The proportion of the hydrates occupied by clinker in natural hydraulic lime being extremely small and the majority of the silicate phase being $C_2S$ are chemical characteristics of natural hydraulic lime. The proportions of the clinker are about 10-25% in NHL2, about 25-40% in NHL 3.5, and about 40-50% in NHL5. In the case of NHL5, not only is $C_2S$ included, but also $C_3S$.

Slaked lime comprises mainly calcium hydroxide, has extremely few so-called impurities such as $SiO_2$, $Al_2O_3$, $Fe_2O_3$, and MgO in comparison with natural hydraulic lime, and hydration reactions do not occur therein.

Artificial Hydraulic Lime

In contrast with natural hydraulic lime, artificial hydraulic lime is so-called Roman cement or ancient cement and is defined in European standard EN459-1 as "limes mainly consisting of calcium hydroxides, calcium silicates and calcium aluminates produced by mixing of suitable materials. They have the property of setting and hardening under water. Atmospheric carbon dioxide contributes to the hardening process." Artificial hydraulic lime in the present embodiment means limestone to which a pozzolanic material (minerals such as silicic acid ($SiO_2$), alumina ($Al_2O_3$), and ferrous oxide ($Fe_2O_3$)) has subsequently been added and is distinguished from natural hydraulic lime.

Hardening Mechanism of Hydraulic Lime

Slaked lime obtained by firing/slaking limestone (CaCOs or calcium carbonate) has the property of reducing to the original limestone by bonding to carbon dioxide ($CO_2$) in air (hereafter, carbonization). Slaked lime is an air-hardening material and after hardening by being mixed with water, the generated $CaCO_3$ crystals do not bond to one another and strength is not expressed.

Natural hydraulic lime is obtained by firing/slaking silicic limestone comprising $SiO_2$, etc. and is lime that has $Ca(OH)_2$ as a main component and comprises hydrates such as $C_2S$. In contact with water, hydrates bond to $Ca(OH)_2$ crystals and, furthermore, $Ca(OH)_2$ changes into $CaCO_3$ crystals sequentially from the surface layer due to carbonization. The $CaCO_3$ crystals maintain a bonded state due to the hydrates and the hydrates also change into $CaCO_3$ crystals (calcium carbonate crystallization) due to the same carbonization action.

Upon the surface layer carbonizing, the $CaCO_3$ crystals form a particulate structure including gaps and carbon dioxide gas in the air is supplied to inner $Ca(OH)_2$ and carbonization progresses slowly.

That is, natural hydraulic lime is a material that has both hydraulicity and air hardening and expresses strength after hardening by mixture with water. The strength thereof is as defined in European standard EN459-1.

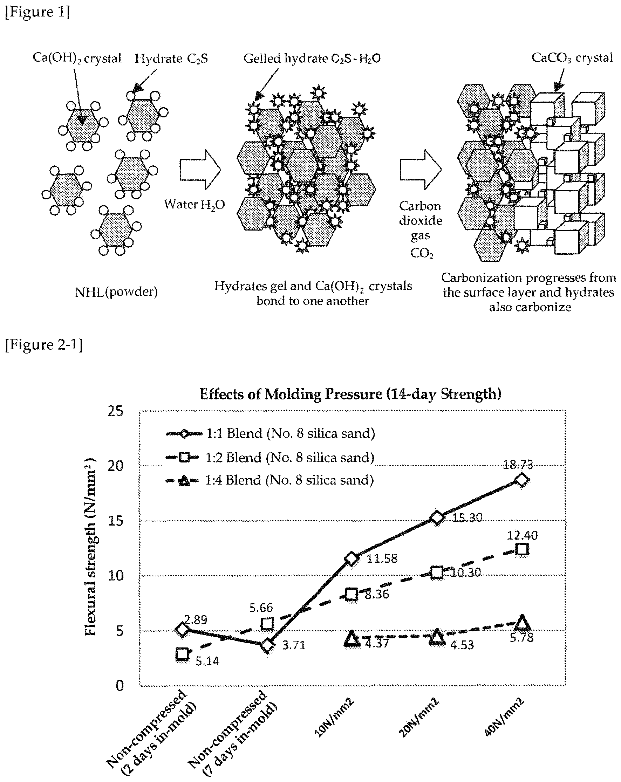

Figure 1 is a conceptual diagram of the hardening mechanism of natural hydraulic lime.

Hydraulic lime can be classified by compressive strength into the following three types defined by European standard EN459-1 (28day strength due to water curing)

| | |
|---|---|
| HL2, NHL2 | 2-7 N/mm$^2$ |
| HL3.5, NHL3.5 | 3.5-10 N/mm$^2$ |
| HL5, NHL5 | 5-15 N/mm$^2$ |

In one embodiment of the present invention, hydraulic lime such as NHL2, NHL3.5, NHL5, HL2, HL3.5, and HL5 can be used, but the hydraulic lime is not limited thereto. Depending on the area of production, there is variation in the amounts of the components in natural hydraulic lime, but $Ca(OH)_2$, $CaCO_3$, $C_2S$, and $SiO_2$ may be considered to be the main components. French natural hydraulic lime is famous, but the natural hydraulic lime may be Tunisian, Italian, or a product of another area. Hydraulic lime preferably has a cementation index of 0.45-0.96, more preferably 0.5-0.88, and yet more preferably 0.5-0.75. When the cementation index is less than 0.45 or exceeds 0.96, the strength expression effect due to carbon dioxide gas curing is not all that high.

In some embodiments, the mixture comprising hydraulic lime and water preferably contains a water content of 5-15% by mass with respect to the hydraulic lime.

Water in which carbon dioxide gas has been dissolved may be used as the water to be mixed with the hydraulic lime.

(Press Molding)

Press molding (compression molding) means a method for obtaining a molded body by applying deformation such as compression to a material by using processing machinery and a mold, tool, etc. and examples of forms of this molding include drawing, deep drawing, flanging, corrugating, edge curling, punching, etc. Further, examples of press molding methods that can be used in one embodiment of the present invention include metal mold pressing methods in which a mold is used to mold, rubber pressing methods (isostatic molding methods), roller molding methods, extrusion molding methods, cast molding methods, etc.. Among the press molding methods above, molding using a metal mold may be performed from the perspective of molding pressure.

In the present embodiment, the flexural strength is improved if the press molding pressure is 5 N/mm$^2$ or greater, but the press molding pressure is preferably 10 N/mm$^2$ or greater, more preferably 15 N/mm$^2$ or greater, and yet more preferably greater than 30 N/mm$^2$.

(Press-molded Body)

In the present embodiment, press-molded body means a molded body obtained by press molding the mixture comprising hydraulic lime and water.

(Aggregate)

In some embodiments, the mixture may further comprise an aggregate. Natural aggregates, artificial aggregates, and recycled aggregates can be used as the aggregate used in the present embodiment, but the aggregate is not limited thereto. Examples of natural aggregates include river sand, river gravel, pit sand, pit gravel, calcium carbonate, zeolite, vermiculite, diatomaceous earth, etc. Examples of artificial aggregates include artificial lightweight aggregates fired at high temperatures such as blast furnace slag aggregate and fly ash. Examples of recycled aggregates include waste glass and aggregates extracted from concrete waste materials. Silica sand No. 5, silica sand No. 6, silica sand No. 8, and reference sands for cement strength testing (JIS R 5201) that are used as cement aggregate may be used as the aggregate and slaked lime can also be used. Depending on the type of aggregate and hydraulic lime to be used, the strength expression can be improved by adjusting the blending ratio of the aggregate to the hydraulic lime.

When an aggregate is used, the blending ratio of the aggregate to the hydraulic lime is preferably a mass ratio (hydraulic lime : aggregate) of less than 1:4, more preferably from 1:1 to 1:3, and yet more preferably from 1:1 to 1:2.

The particle size of the aggregate is preferably such that the maximum diameter is 5 mm or less, more preferably 1 mm or less, and yet more preferably 150 μm or less.

Moreover, the peak value of the particle size distribution of the aggregate is preferably 30-1000 μm, more preferably 30-500 μm, and yet more preferably 30-150 μm.

(Other Components)

Further, in some embodiments, the mixture can comprise an internal reinforcing material in a grid, network, or axial state. A substance made from a metal such as iron, a resin, glass fibers, carbon fibers, or plant fibers can be used as the reinforcing material in a grid, network, or axial state, but the reinforcing material is not limited thereto.

Moreover, the production method for the molded body of the present embodiment does not require a heating step, so the mixture can contain various components. Components to be contained by the mixture include plant fibers such as pulp or plastering fibers; natural resins such as gum arabic, natural rubber, casein, and cellulose; synthetic resins such as acrylic and vinyl acetate; carbon-based materials such as carbon fibers or carbon; metals with low melting temperatures such as zinc, indium, gallium, tin, bismuth, lead, gold, silver, and platinum or alloys or compounds thereof, etc. For example, by including an adsorbing material such as a carbon-based material, a molded body having a deodorizing action can be obtained. Further, coloring can be performed by adding a pigment, dye, etc.

[Carbon Dioxide Gas Curing Process]

The production method in the present embodiment comprises a step for submitting the press-molded body to a carbon dioxide gas cure.

The period of the carbon dioxide gas cure is a period necessary and sufficient for the press-molded body of the mixture comprising hydraulic lime and water to harden. In one embodiment of the present invention, the period differs depending on the size of the molded body, the temperature and humidity of the surrounding environment, etc., but generally is desirably two days or longer, more desirably three days or longer, and yet more desirably seven days or longer.

In the present embodiment, the press-molded body is not restrained by a mold and has many free surfaces, so the period required for hardening by the carbon dioxide gas cure is shortened to less than that in a state restrained by a mold.

The higher the carbon dioxide gas concentration of the carbon dioxide gas cure over the atmospheric concentration (approximately 0.03%), the more effects of strength expression can be expected and, for example, the concentration is desirably 1% by volume or greater. High strength can be expressed at an early stage by carbon dioxide gas curing at 5% by volume or greater and high strength can be expressed at an earlier stage by submission to higher concentration carbon dioxide gas curing such as at 10% by volume or 20% by volume.

Depending on the size of the building material to be produced or the surrounding environment, the method for implementing the carbon dioxide gas cure can be adjusted. For example, when a 100 × 100 × 10 mm press-molded body is used, the press-molded body is placed on a shelf in a carbon dioxide gas curing chamber and then the door is closed and the interior made airtight. Thereafter, the air in the curing chamber is temporarily vented and then carbon dioxide is injected until the desired concentration is reached. Carbon dioxide is automatically or manually injected, as appropriate, in order to maintain the desired carbon dioxide concentration. When a carbon dioxide gas curing kiln is used, this adjustment can be performed in a pressurized environment. When installing at a construction site, carbon dioxide gas can be injected by establishing a temporary carbon dioxide gas curing chamber surrounding the press-molded body.

The flexural strength of a molded body comprising hydraulic lime produced by the method of production of the present embodiment is the flexural stress value calculated by dividing the maximum moment until a test piece fractures due to a flexural test in which both ends are supported and a load is applied to a central part by the section modulus of the test piece. The molded body produced with the method of production of the present embodiment is characterized by having a flexural strength of 7.5 N/mm$^2$ or greater and more preferably a flexural strength of 8 N/mm$^2$ or greater. In methods as in other embodiments, it is possible to produce molded bodies comprising hydraulic lime and having a flexural strength of 10 N/mm$^2$ or greater, 19 N/mm$^2$ or greater, or furthermore, 23 N/mm$^2$ or greater by adjusting the pressing pressure, the particle size and blending ratio of the aggregate, and the carbon dioxide gas curing conditions.

Further, the molded body prepared from a mixture comprising hydraulic lime that has been subjected to calcium carbonate crystallization of the present embodiment preferably has a density of 1.5 g/cm$^3$ or greater, more preferably 1.65 g/cm$^3$ or greater, yet more preferably 1.7 g/cm$^3$ or greater, and especially preferably 1.9 g/cm$^3$ or greater.

[Member]

The molded body in one embodiment of the present invention is used as a member by being machined. Examples of members include construction members such as tiles, panels, and boards, dishes, daily necessities, machine components, electrical appliances, etc.

**EXAMPLES**

[Example 1]

1. Fabrication of Test Pieces

1.1 Materials

(Natural Hydraulic Lime)

The hydraulic lime used in fabrication of the test pieces is NHL2 produced at Location A (the east of France) and the chemical components thereof are as shown in Table 1.

(Aggregate)

In the fabrication of the test pieces, silica sand No. 5 (Mikawa silica sand), silica sand No. 6 (Mikawa silica sand), and silica sand No. 8 (Mikawa silica sand), which have different particle size distributions, and calcium carbonate (Hitachi Saiseki) with a maximum particle diameter of 250 $\mu$m or lower and a peak particle size distribution value of 40-100 $\mu$m were used.

1.2 Blending Amounts of Each Component in the Test Pieces

The parameters of the produced test pieces are shown in Table 2.

(Amount of Water)

A press-molded body was not obtained when 55% by mass of water with respect to hydraulic lime was added in accordance with the specifications of European standard EN459-2 and press molding was performed, so the amount of water to be mixed when fabricating the test pieces was set to 10% by mass with respect to the hydraulic lime.
As specified in European standard EN459-2, 55% by mass of water with respect to the hydraulic lime was added to non-compression molded test pieces to be cured in molds.

(Aggregate)

The ratios of the hydraulic lime to the amount of aggregate blended when fabricating the test pieces were set to 1:1, 1:2, and 1:4.

1.3 Production Process for the Test Pieces

(Press Molding Conditions)

Press molding obtained 100 $\times$ 100 $\times$ 10 mm press-molded bodies by molding at pressures of 0 N/mm$^2$ (non-compressed), 10 N/mm$^2$, 20 N/mm$^2$, and 40 N/mm$^2$ using a powder compacting press.

(Curing Conditions)

Tests were performed with two sets of curing conditions, air curing (temperature 20$\pm$1°C and relative humidity 60$\pm$5%) and carbon dioxide gas curing (temperature 20$\pm$1°C, relative humidity 60$\pm$5%, and carbon dioxide gas concentration 5%).
The following two sets of conditions for the non-compression molded test pieces were used: one in which, referring to Patent Document 1, a test piece that had been water cured for two days (the mold was sealed for two days by plastic plates) was released from the mold and carbon dioxide gas cured and the other in which a test piece was set in an open mold, carbon dioxide gas cured as-is, released from the mold after seven days, and carbon dioxide gas cured once more.

8

[Table 2] Test Piece Parameters

| Parameter | Conditions | |
|---|---|---|
| Hydraulic Lime | NHL2 (Production Area A) | |
| Molding Pressure | 0 N/mm$^2$ (non-compressed), 10 N/mm$^2$, 20 N/mm$^2$, 40 N/mm$^2$ | |
| Aggregate | Silica sand No. 5, silica sand No. 6, silica sand No. 8, calcium carbonate | |
| Blend Ratio | Hydraulic lime : Aggregate 1:1, 1:2, 1:4 | |
| Curing Method | Air Curing | Air curing after compression molding, 14-day curing, 21-day curing, 28-day curing |
| | Carbon dioxide gas curing 5% (compression molded) | After compression molding, 14-day curing, 21-day curing, 28-day curing |
| | Carbon dioxide gas curing 5% (non-compressed) | 2 days in mold: After curing for 2 days sealed in mold, released from mold, cured for 14 days and 28 days |
| | | 7 days in mold: After curing for 7 days in open mold, released from mold, cured for 14 days, 21 days, and 28 days |

2 Measurement of Test Piece Flexural Strength

(Measurement Method)

100 × 100 × 10 mm test pieces were fabricated and a test measuring the flexural strength was performed. The flexural strength was measured with two test pieces as one set and the result is the average value of the two. Measurement was performed using a 20 kN universal tester (manufactured by Shimadzu Corporation). The method for applying a load to the test pieces was performed by three-point supporting unidirectional monotonic loading and the loading speed was controlled from 1 to 10 N/sec, considering the maximum strength.

The flexural strength after the three-point bending is calculated according to the following formula:

$$\varrho = 3PD/2bh^2$$

Wherein $\varrho$ is the flexural strength (N/mm$^2$), P is the fracture load (N), D is the support point distance (mm), and bh$^2$ represents the dimensions of the test piece (width b (mm) and height h (mm)) and D here was set to 90 mm.

3 Measurement Test Results

3.1 Effects of Molding Pressure and Blending Ratio of Hydraulic Lime and Aggregate

Press molding was performed at pressures of 0 N/mm$^2$ (non-compressed), 10 N/mm$^2$, 20 N/mm$^2$, and 40 N/mm$^2$ and the effects of the press molding pressure on the flexural strength were investigated. Further, the effects of the blending ratio of hydraulic lime and the aggregate on the flexural strength were investigated for cases in which the blending ratio of hydraulic lime to the aggregate was set to 1:1, 1:2, and 1:4.

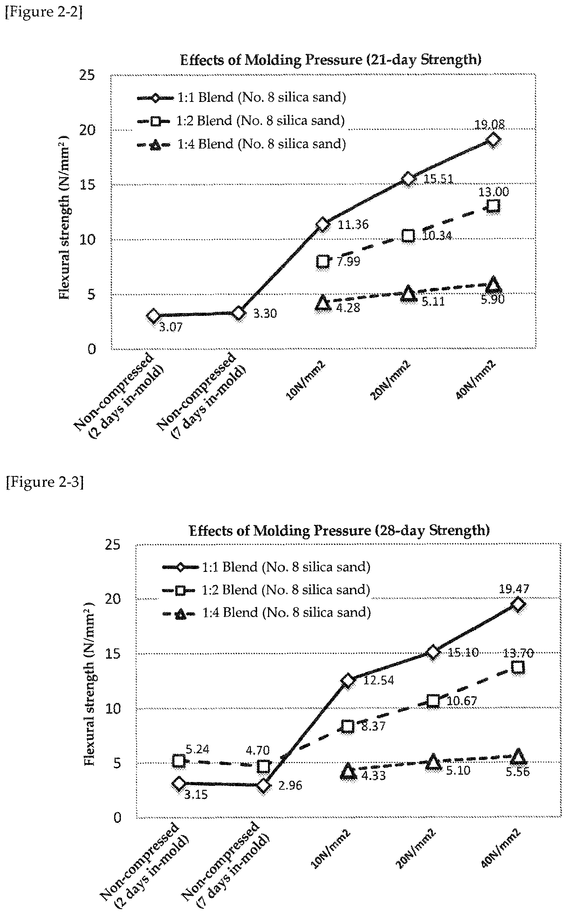

As shown in Figure 2, it became clear that the higher the pressure when molding, the more the flexural strength increased. Further, the higher the blending ratio of the aggregate to the hydraulic lime, the lower the flexural strength, but it became clear that the effect of flexural strength falling due to blending the aggregate is suppressed when the blending ratio of the hydraulic lime to the aggregate is 1:1 or 1:2.

When the blending ratio of silica sand No. 8 to the hydraulic lime was set to 1:1 and the molding pressure was 40 N/mm$^2$, a flexural strength of 19.47 N/mm$^2$ was obtained with 28-day carbon dioxide gas curing (Figure 2). This value was roughly four times the strength of the result on the 28th day for the non-compressed seven-day in-mold test pieces (28-day strength: 3-5 N/mm$^2$). It is clear from this result that cases in which pressure is applied during molding promote the expression of higher strength in contrast to the cases restrained with a mold.

3.2 Effects of Curing Conditions

Carbon dioxide gas curing using 5% by volume carbon dioxide gas and air curing were performed for 3 days, 7 days, 14 days, 21 days, and 28 days and the effect of the number of days of carbon gas curing on the flexural strength was investigated.

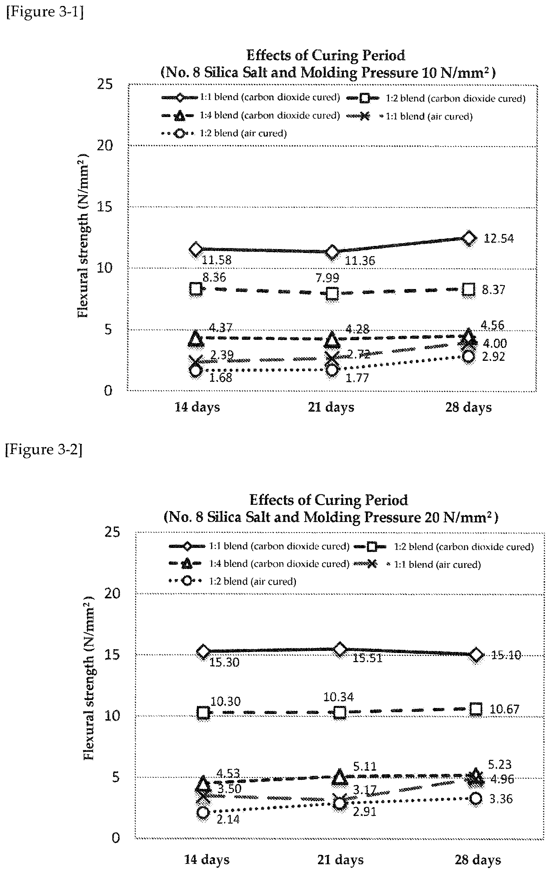

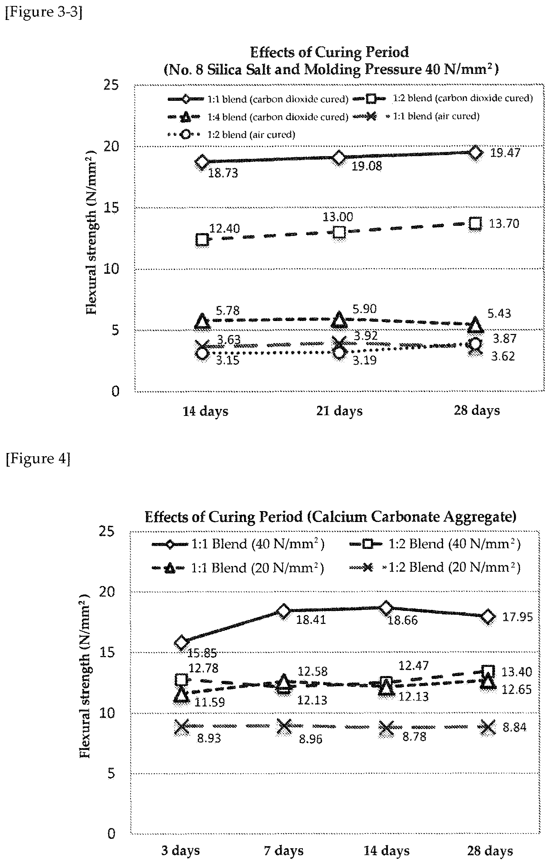

As shown in Figure 3, when the molding pressure is 40 $N/mm^2$, a flexural strength of 19.47 $N/mm^2$ was obtained when the blending ratio of silica sand No. 8 to the aggregate was set to 1:1. This value is approximately five times the test result obtained in the air curing (3.62 $N/mm^2$ when using a test piece manufactured under the same conditions such as molding pressure, blending ratio, and curing period) and it can be confirmed that the flexural strength can be increased up to about five times by carbon dioxide curing.

As is understood from the results when calcium carbonate is used as the aggregate (Figure 4), excluding cases in which the molding pressure is 40 $N/mm^2$, the maximum strength is expressed at a curing period of 3 days. Meanwhile, when the molding pressure is 40 $N/mm^2$, the maximum strength was expressed at 7 days. From this, it is considered that the intercrystal distance shrinks with increases in the compressive force when molding and that time until the strength is expressed is necessary because the carbon dioxide gas does not readily pass through the molded body.

Due to confirmation of alkali residue with phenol phthalein on cross-sections after testing, it was confirmed that carbonization progresses extensively due to carbon dioxide gas curing for at least 7 days.

Meanwhile, when air cured, the flexural strength was 2 $N/mm^2$ or less, so it can be confirmed that carbon dioxide gas curing affects increases in strength.

3.3 Effects of Aggregate Particle Size

The effects of the particle size of the aggregate to be mixed with the hydraulic lime on the flexural strength were investigated by comparing the three types of sand, silica sand No. 5, silica sand No. 6, and silica sand No. 8, under conditions of a blending ratio of the hydraulic lime to the aggregate of 1:2 and a molding pressure of 10 $N/mm^2$.

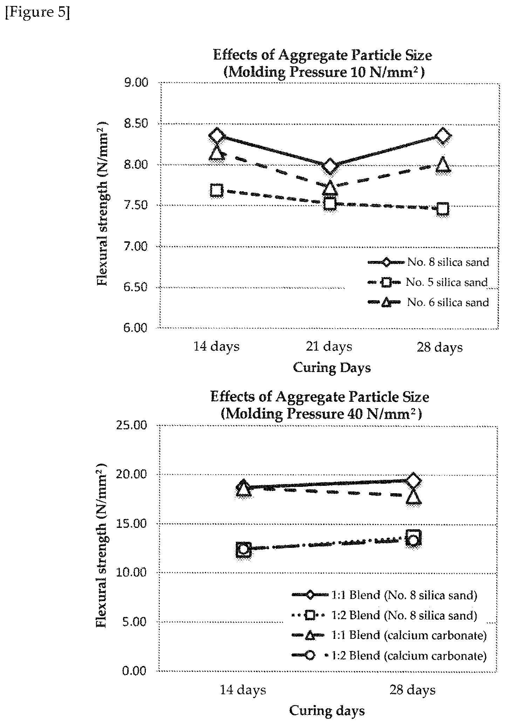

As shown in Figure 5, while the effect of the aggregate particle size is small, the greatest trend toward increased strength was shown by silica sand No. 8, which has a small particle size.

Further, regarding the effects of the type of aggregate, it is understood that the results of the blending ratio of the hydraulic lime to the aggregate being 1:1 or 1:2 and the molding pressure being 40 $N/mm^2$ were equivalent in cases in which the aggregate was set as calcium carbonate and in cases in which the aggregate was set as silica sand No. 8. Due to the characteristics thereof, calcium carbonate has a particle size distribution peak near 40-100 $\mu$m, which is close to that of silica sand No. 8, so it can be confirmed that the effects due to the type of aggregate are small and particle size characteristics of the aggregate affect strength expression.

[Example 2]

1. Fabrication of Test Pieces

Using the materials used in Example 1, the water content was adjusted, as appropriate, and test pieces with dimensions equivalent to those of Example 1 were fabricated and supplementary flexural tests of the effects due to the molding pressure, carbon dioxide gas curing concentration, and the presence or absence of an aggregate to be blended with the hydraulic lime were carried out once more. The parameters of the fabricated test pieces are shown in Table 3.

In contrast to the 10-40 $N/mm^2$ molding pressure applied in Example 1, the lower limit was set to 5 $N/mm^2$ and the upper limit to 60 $N/mm^2$ and the effects of the molding pressure were investigated in Example 2.

A carbon dioxide concentration of 1% was also adopted as a curing condition; however, the concentration of 1% was used only when the curing period was set to 2 days. The maximum number of days for the curing period was set to 14 days, as remarkable increases were not observed at curing periods of 14 days or longer in Example 1.

The calcium carbonate aggregate from Hitachi Saiseki with a particle size distribution peak of 40-100 $\mu$m used in Example 1 was used as the blended aggregate once more on the basis of the result that the effect of the type of aggregate is small in Example 1. Furthermore, test pieces that are made of hydraulic lime alone and do not comprise an aggregate were also tested.

Molding was performed by compressing such that the molding pressure is triaxially isotonic using a 3000 kN universal tester (manufactured by Instron) and the shape of the test pieces was made the same as in Example 1, 100 $\times$ 100 $\times$ 10 mm.

[Table 3] Test Piece Parameters

| Parameter | Conditions |
| --- | --- |
| Hydraulic Lime | NHL2 (Production Area A) |

(continued)

| Parameter | Conditions | |
|---|---|---|
| Molding Pressure | 3 N/mm$^2$, 5 N/mm$^2$, 15 N/mm$^2$, 30 N/mm$^2$, 50 N/mm$^2$, 60 N/mm$^2$ | |
| Blended Aggregate | Calcium carbonate, no aggregate (hydraulic lime alone) | |
| Blending Ratio by Mass | Hydraulic lime : Aggregate 1:1, 1:0 | |
| Curing Method | Carbon dioxide gas curing 5% (compression molded) | After compression molding, strength measured on Day 2, Day 7, and Day 14 |
| | Carbon dioxide gas curing 1% (compression molded) | After compression molding, strength measured on Day 2 |

2 Measurement of Test Pieces

2.1 Measurement of Test Piece Flexural Strength

The flexural strength measurement test was performed by fabricating 100 × 100 × 10 mm test pieces, similar to Example 1. The number of test pieces was set at three and the average therebetween was made the test result value. The method for applying a load to the test pieces was performed by three-point supporting unidirectional monotonic loading with a 100 kN universal tester (manufactured by Shimadzu Corporation), and the loading speed was controlled to 10 N/sec. The flexural strength according to the three-point bending was calculated with the same formula as Example 1.

3 Measurement Test Results

3.1 Effects of the Molding Pressure and the Curing Period

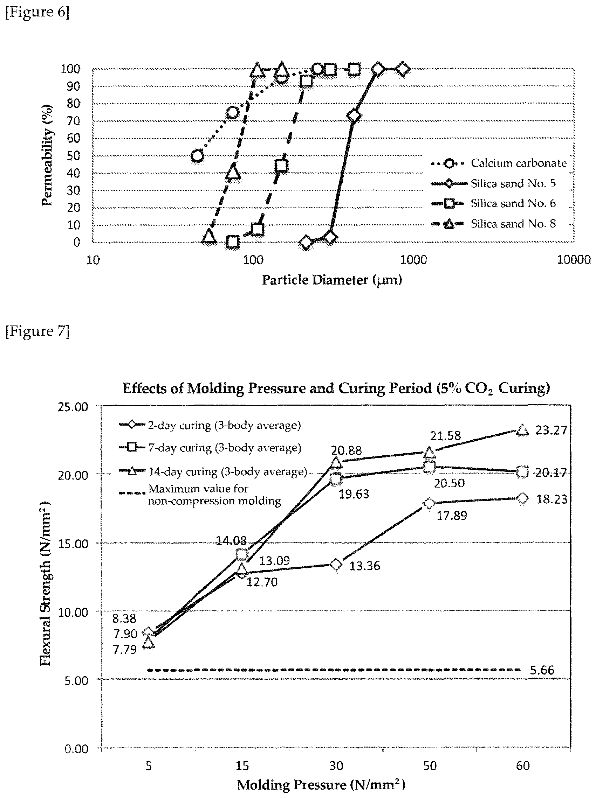

Figure 7 shows the test results for the molding pressure-flexural strength relationship when the aggregate (calcium carbonate) was blended at a ratio of 1:1 to the hydraulic lime and the test pieces were cured at a carbon dioxide concentration of 5%.
As the molding pressure increases, the longer the curing period of the test piece, the higher the flexural strength rises, but it was confirmed that a line very close to seven-day curing was shown by submitting to two-day curing. Further, by increasing the molding pressure with a curing period of seven days or longer, high flexural strengths of 20 N/mm$^2$ or higher, exceeding the results in Example 1, were obtained.
As the molding pressure falls, the effect of the curing period becomes smaller, for example, at 5 N/mm$^2$ in the case of two-day curing, which is the shortest period, the flexural strength was 7.79 N/mm$^2$. This flexural strength value when the molding pressure is 5 N/mm$^2$ and curing is for two days is roughly 1.5 times the maximum flexural strength of 5.66 N/mm$^2$, which is the result of testing with the non-compressed/in-mold molded (hereafter, non-compression molding) test pieces described in Patent Document 1 and it is shown that, by setting the molding pressure to 5 N/mm$^2$ or greater, the flexural strength is sufficiently improved over cases of non-compression molding.
Here, the flexural fracture load of indoor flooring/bathroom flooring defined by JIS A 5209 ceramic tile (5.1.6 flexural rupture load) is defined as 540 N or greater and, converted to flexural strength for the dimensions 100 × 100 × 10 mm, is equivalent to 7.53 N/mm$^2$. In contrast thereto, the flexural strength value when the molding pressure is 5 N/mm$^2$ and curing is for two days is 7.79 N/mm$^2$, which satisfies the abovementioned specified value.

3.2 Effects of the Curing Carbon Dioxide Concentration and the Molding Pressure

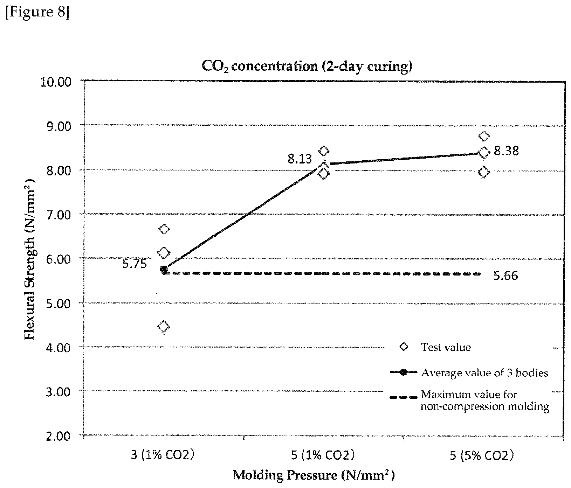

Figure 8 shows the flexural strength when the blending ratio of the hydraulic lime to calcium carbonate aggregate is set to 1:1, the carbon dioxide curing concentration is set to 1%, and the molding pressure is 3 N/mm$^2$ or 5 N/mm$^2$. The results when the carbon dioxide curing concentration is set to 5% and the molding pressure is set to 5 N/mm$^2$ (those shown in Figure 7) are shown as a comparison, but, with the same molding pressure, the flexural strength was equivalent or slightly smaller when the carbon dioxide concentration was 1% and when the carbon dioxide concentration was 5%. The average of the flexural strengths when the carbon dioxide concentration was 1% is 8.13 N/mm$^2$ and is 1.4 times the maximum value of 5.66 N/mm$^2$ in the case of non-compression molding, and the value was equivalent when the carbon dioxide concentration was 5%.
The results for the flexural strength when the carbon dioxide curing concentration was 1% and the molding strength was 3 N/mm² fell below the flexural strength in the case of non-compression molding, so it has become clear that sufficient flexural strength is obtained by setting the molding pressure to 5 N/mm² or greater. Furthermore, at a molding pressure of 3 N/mm², the handling performance in moving operations fell due to insufficient strength immediately following molding.

From the above results, it has become clear that, by setting the molding pressure to 5 N/mm² and the carbon dioxide curing concentration to 1% or greater, flexural strength greater than that in non-compressive molding is obtained and that molded articles that are practical in manufacture and use environments can be made.

3.3 Test Results when only Hydraulic Lime is used

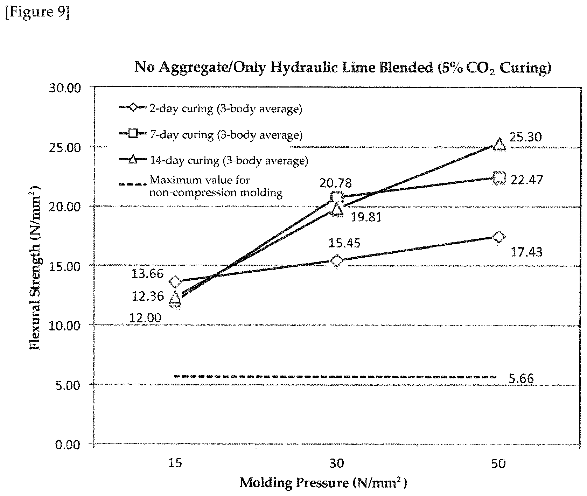

Figure 9 shows the relationship between molding pressure and flexural strength when test pieces are molded using only hydraulic lime without blending an aggregate. The test was performed with the molding pressure in the range of 15, 30, and 50 N/mm².

As shown in Figure 9, when molding using only hydraulic lime, flexural strength equivalent to or slightly exceeding that in cases in which a calcium carbonate aggregate is included is demonstrated.

Accordingly, even when the blending ratio of the blended aggregate is greatly reduced or the composition is set as hydraulic lime alone, it has become clear that high flexural strength due to carbonization can be expressed by adding molding pressure without great effects on flexural strength.

3.4 Test Piece Density Measurement Results

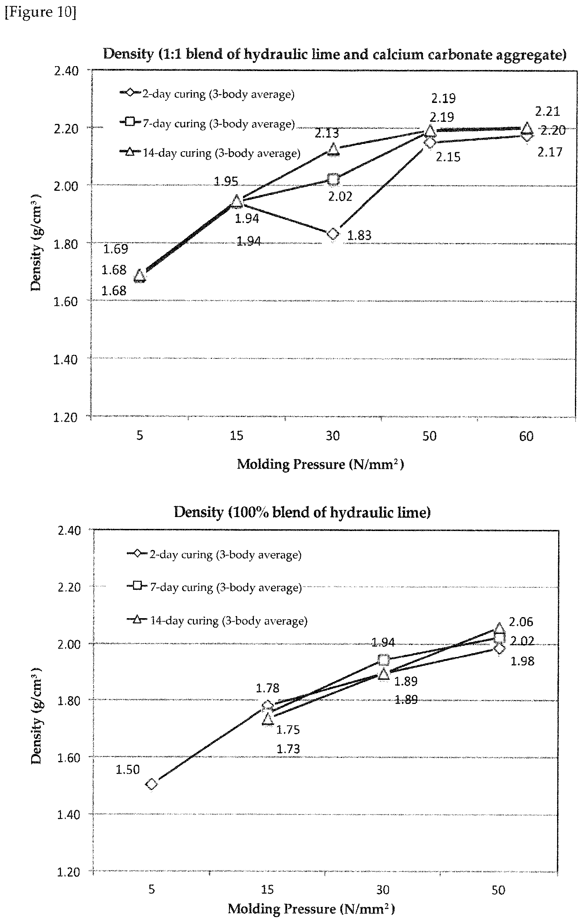

The results of measuring the density of molded bodies produced at a blending ratio of hydraulic lime to a calcium carbonate aggregate of 1:1 and molded bodies produced from hydraulic lime (no aggregate) under the condition of carbon dioxide concentration of 5% are shown in Figure 10.

When the aggregate was calcium carbonate (blending ratio 1:1) and the molding pressure was 5 N/mm², a value of 1.68 g/cm³ was obtained.

In the case in which hydraulic lime alone that does not comprise an aggregate was blended, when the molding pressure was 5 N/mm² and carbon dioxide curing was for two days, the density was 1.5 g/cm³.

3.5 Effects of the Degree of Progression of Calcium Carbonate Crystallization

The relationship between the degree of progression of calcium carbonate crystallization and flexural strength was confirmed by applying a phenol phthalein solution to cross-sections of molded bodies and observing. In test pieces produced with a molding pressure of 15 N/mm², calcium carbonate crystallization due to carbon dioxide curing for two days had progressed on the entire surface. Further, in test pieces produced with a molding pressure of 15 N/mm² or less, it was similarly confirmed that calcium carbonate crystallization progressed regardless of the blending ratio of the aggregate and that carbonization progresses on almost the entire surface (at least 90% of the cross section) even when the carbon dioxide concentration is low (1% by volume).

In general, it is thought that the progression of calcium carbonate crystallization slows in molded bodies that were produced at a high molding pressure and do not comprise an aggregate, so the degree of progression of calcium carbonate crystallization of test pieces produced without an aggregate and at a molding pressure of 50 N/mm² was confirmed. As a result, it was observed that hydraulic lime at least 3 mm inward from the surface undergoes calcium carbonate crystallization and it has become clear that even molded bodies in which calcium carbonate crystallization progressed about 3 mm from the surface exhibit strength.

[Table 4] The Degree of Progression of Calcium Carbonate Crystallization from Test Piece Surfaces

| Number of Days of Carbon Dioxide Curing | 2-Day Curing | 7-Day Curing | 14-Day Curing |
|---|---|---|---|
| Molding pressure of 15 N/mm² or less All blends | Completely carbonized | Completely carbonized | Completely carbonized |
| Molding pressure of 50 N/mm² Only hydraulic lime blended (blending ratio 1:0) | 3.0 mm | 4.5 mm | Completely carbonized |
| Molding pressure of 60 N/mm² Calcium carbonate aggregate blend (blending ratio 1:1) | 3.3 mm | 4.0 mm | 4.5 mm |

Conclusion

It has been confirmed that a molded body in which a mixture of hydraulic lime and water was press molded and submitted to carbon dioxide gas curing expresses strength improved over a molded body in which a mold was filled with a mixture of hydraulic lime and water, and the mixture was then restrained thereby and submitted to carbon dioxide gas curing.

## INDUSTRIAL APPLICABILITY

Application to manufacturing of various forms of materials is possible by using a strengthening technique by means of carbonization of a compression molded article of hydraulic lime. Application in place of ceramic products, wood products, and various members such as cement secondary members and metal secondary members is possible.

As a production method, a method in which hydraulic lime alone or mixed with an aggregate in a sealed space with a carbon gas concentration of 5% or greater undergoes compression molding and hardening is promoted is considered.

In contrast, carbonization does not easily advance in structures having cement as a raw material, so it is difficult to recover carbon dioxide in a short time.

Furthermore, by absorbing carbon dioxide gas, the effect of recovering carbon dioxide, which originates from decarbonization, released from ore when producing natural hydraulic lime is obtained. The carbon dioxide originating from decarbonization accounts for 60-70% of that released when natural hydraulic lime is produced and a carbon dioxide cycle as shown in Figure 10 occurs.

Setting the proportion of contained CaO according to chemical analysis (Table 1) to 60%, the carbon dioxide $CO_2$ recovery rate of natural hydraulic lime can be calculated as in the following formula.

$$CO_2 \text{ molecular weight } 44.0095 \text{ C/CaO molecular weight } 56.0074 \text{ C} \times 0.60 \text{ content rate of CaO in NHL} = 0.47$$

That is, by using this technique by means of carbonization, about 470 (kg) of carbon dioxide per ton (one (t)) of natural hydraulic lime can be recovered.

By setting an appropriate blending ratio of hydraulic lime, slaked lime, silica sand, and calcium carbonate in a produced compression molded article, following recovery, recycling into raw material hydraulic lime by production processes such as firing and slaking is possible. By producing a compression molded article with the recycled hydraulic lime as a raw material, production processes for members that make use of recycling can be achieved.

## Claims

1.  A method for producing a molded body comprising (a) a step for press-molding a mixture comprising hydraulic lime and water at a pressure of 5 N/mm² or greater and (b) a step for submitting the press-molded body obtained in (a) to carbon dioxide gas curing.

2.  The production method according to claim 1, wherein the press-molding is performed at a pressure of 15 N/mm² or greater.

3.  The production method according to claim 1 or 2, wherein the carbon dioxide gas curing is for 2 days or longer at a carbon dioxide gas concentration of 1% by volume or greater.

4.  The production method according to any one of claims 1 to 3, wherein an aggregate is blended in the mixture at a mass ratio to the hydraulic lime (hydraulic lime : aggregate) of less than 1:4.

5.  The production method according to any one of claims 1 to 4, wherein the cementation index of the hydraulic lime is 0.45-0.9.

6.  A molded body produced by the production method according to any one of claims 1 to 5.

7.  A member formed by processing the molded body according to claim 6.

13

**Patentansprüche**

1. Verfahren zur Herstellung eines Formkörpers, umfassend (a) einen Schritt zum Pressformen einer Mischung, die hydraulischen Kalk und Wasser umfasst, bei einem Druck von 5 N/mm$^2$ oder mehr und (b) einen Schritt, um den in (a) erhaltenen pressgeformten Körper einer Kohlendioxid-Gashärtung zu unterziehen.

2. Herstellungsverfahren nach Anspruch 1, wobei das Pressformen bei einem Druck von 15 N/mm$^2$ oder mehr durchgeführt wird.

3. Herstellungsverfahren nach Anspruch 1 oder 2, wobei die Aushärtung mit Kohlendioxidgas 2 Tage oder länger bei einer Kohlendioxidgaskonzentration von 1 Volumenprozent oder mehr erfolgt.

4. Herstellungsverfahren nach einem der Ansprüche 1 bis 3, wobei ein Zuschlagstoff in einem Massenverhältnis zum hydraulischen Kalk (hydraulischer Kalk : Zuschlagstoff) von weniger als 1:4 in die Mischung eingemischt wird.

5. Herstellungsverfahren nach einem der Ansprüche 1 bis 4, wobei der Zementationsindex des hydraulischen Kalkes 0,45-0,9 beträgt.

6. Geformter Körper, hergestellt nach dem Herstellungsverfahren gemäß einem der Ansprüche 1 bis 5.

7. Durch Verarbeitung des Formkörpers nach Anspruch 6 gebildetes Element.

**Revendications**

1. Méthode de production d'un corps moulé comprenant (a) une étape de moulage à la presse d'un mélange comprenant de la chaux hydraulique et de l'eau à une pression de 5 N/mm$^2$ ou plus et (b) une étape de soumission du corps moulé à la presse obtenu en (a) à un durcissement au gaz de dioxyde de carbone.

2. Méthode de production selon la revendication 1, dans laquelle le moulage à la presse est effectué à une pression de 15 N/mm$^2$ ou plus.

3. Méthode de production selon la revendication 1 ou 2, dans laquelle le durcissement au gaz de dioxyde de carbone dure 2 jours ou plus à une concentration de dioxyde de carbone égale ou supérieure à 1 % en volume.

4. Méthode de production selon l'une des revendications 1 à 3, dans laquelle un agrégat est mélangé au mélange dans un rapport de masse avec la chaux hydraulique (chaux hydraulique : agrégat) inférieur à 1:4.

5. Méthode de production selon l'une des revendications 1 à 4, dans laquelle l'indice de cimentation de la chaux hydraulique est compris entre 0,45 et 0,9.

6. Corps moulé produit par le procédé de fabrication selon l'une quelconque des revendications 1 à 5.

7. Membre formé par le traitement du corps moulé selon la revendication 6.

[Figure 1]

Ca(OH)$_2$ crystal    Hydrate C$_2$S    Gelled hydrate C$_2$S-H$_2$O    CaCO$_3$ crystal

Water H$_2$O

Carbon dioxide gas CO$_2$

NHL(powder)

Hydrates gel and Ca(OH)$_2$ crystals bond to one another

Carbonization progresses from the surface layer and hydrates also carbonize

[Figure 2-1]

**Effects of Molding Pressure (14-day Strength)**

- 1:1 Blend (No. 8 silica sand)
- 1:2 Blend (No. 8 silica sand)
- 1:4 Blend (No. 8 silica sand)

Flexural strength (N/mm$^2$)

Values shown: 2.89, 5.14, 5.66, 3.71, 11.58, 8.36, 4.37, 15.30, 10.30, 4.53, 18.73, 12.40, 5.78

X-axis: Non-compressed (2 days in-mold), Non-compressed (7 days in-mold), 10N/mm2, 20N/mm2, 40N/mm2

[Figure 2-2]

Effects of Molding Pressure (21-day Strength)

[Figure 2-3]

Effects of Molding Pressure (28-day Strength)

[Figure 3-1]

**Effects of Curing Period
(No. 8 Silica Salt and Molding Pressure 10 N/mm²)**

[Figure 3-2]

**Effects of Curing Period
(No. 8 Silica Salt and Molding Pressure 20 N/mm²)**

[Figure 3-3]

**Effects of Curing Period**
**(No. 8 Silica Salt and Molding Pressure 40 N/mm²)**

[Figure 4]

**Effects of Curing Period (Calcium Carbonate Aggregate)**

[Figure 5]

Effects of Aggregate Particle Size (Molding Pressure 10 N/mm²) — Flexural strength (N/mm²) vs Curing Days. Legend: No. 8 silica sand, No. 5 silica sand, No. 6 silica sand.

Effects of Aggregate Particle Size (Molding Pressure 40 N/mm²) — Flexural strength (N/mm²) vs Curing days. Legend: 1:1 Blend (No. 8 silica sand), 1:2 Blend (No. 8 silica sand), 1:1 Blend (calcium carbonate), 1:2 Blend (calcium carbonate).

[Figure 6]

[Figure 7]

Effects of Molding Pressure and Curing Period (5% $CO_2$ Curing)

[Figure 8]

CO$_2$ concentration (2-day curing)

[Figure 9]

No Aggregate/Only Hydraulic Lime Blended (5% $CO_2$ Curing)

[Figure 10]

Density (1:1 blend of hydraulic lime and calcium carbonate aggregate)

Density (100% blend of hydraulic lime)

[Figure 11]

Fuel/Other sources
$CO_2$(30~40%)

Decarbonization Source
$CO_2$(60~70%)

Releases

Recovered

Fuel NHL Production

Raw Materials

$CO_2$ Curing

Member

Recovered
Reused

Disposal

Calcium carbonate (limestone)
harmless

CO Reduction with NHL

**EP 3 603 911 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5175165 B

- WO 2013079732 A